# EUROPÄISCHE PATENTSCHRIFT

(11) **EP 4 122 594 B1**
(45) Veröffentlichungstag und Bekanntmachung des Hinweises auf die Patenterteilung: **06.03.2024**
(21) Anmeldenummer: 22000185.3
(22) Anmeldetag: 15.07.2022
(51) Int. Cl.: B01J 19/24, F16L 59/20

(54) **WÄRMETAUSCHER ZUM KÜHLEN VON SPALTGAS**
HEAT EXCHANGER FOR COOLING CRACKED GAS
ÉCHANGEUR DE CHALEUR PERMETTANT DE REFROIDIR DU GAZ DE CRAQUAGE

(30) Priorität: 23.07.2021 DE 102021003955
(43) Veröffentlichungstag der Anmeldung: 25.01.2023
(73) Patentinhaber: Borsig GmbH, 13507 Berlin (DE)
(72) Erfinder: BIRK, Carsten, 16548 Glienicke (DE); FÖRSTER, Andreas, 13465 Berlin (DE); VOGT, Michael, 16845 Dreetz (DE)
(74) Vertreter: Radünz, Ingo

(56) Entgegenhaltungen:
- DE-A1- 19 707 915
- US-A- 5 579 831
- US-A- 5 690 168
- US-A1- 2007 193 729
- US-A1- 2010 319 888

## Beschreibung

Die Erfindung bezieht sich auf einen Wärmetauscher zum Kühlen von Spaltgas mit einer Rohrverbindung zwischen einem ungekühlten und einem gekühlten Rohr und ein Verfahren zum Verbinden einer Rohrverbindung zwischen einem ungekühlten und einem gekühlten Rohr. Ein Wärmetauscher gemäß dem Oberbegriff des Anspruchs 1 ist in der US 2007/0193729 offenbart.

Ein derartiger Wärmetauscher zum Kühlen von Spaltgas mit einer Rohrverbindung zwischen einem ungekühlten und gekühlten Rohr ist aus EP 2 278 248 B1 bekannt, wobei das gekühlte Rohr als Doppelrohr ausgeführt ist. Das Doppelrohr besteht aus einem gekühlten Innenrohr und einem Mantelrohr. Das Innenrohr ist von dem Mantelrohr mit einem radialen Abstand unter Bildung eines von einem Kühlmedium durchströmten Rohrzwischenraumes umgeben. Das gekühlte Rohr steht mit dem ungekühlten Rohr über eine Wasserkammer und einen mit dem ungekühlten Rohr verbundenen, im Querschnitt gabelförmigen Eintrittskopf in Verbindung. Der Eintrittskopf weist einen inneren Rohrabschnitt und einen äußeren Rohrabschnitt auf. Ein Zwischenraum ist zwischen dem inneren Rohrabschnitt und dem äußeren Rohrabschnitt ausgebildet und mit einer Wärmeisolierung aus mehreren Schichten eines wärmeisolierenden Materials ausgefüllt. Der äußere Rohrabschnitt ist über die Wasserkammer mit dem Mantelrohr verbunden. Der innere Rohrabschnitt steht auf der Stirnseite der Wasserkammer auf der Seite des Eintrittskopfes dem gekühlten Innenrohr mit einem geringen axialen Abstand gegenüber. Ein Ring ist zwischen den Stirnflächen des Innenrohres und dem inneren Rohrabschnitt angeordnet.

Ein solcher Wärmetauscher zum Kühlen von Spaltgas mit einer Rohrverbindung ist auch aus DE 195 31 330 C2 bekannt. Spaltgas wird durch eine thermische Spaltung von Kohlenwasserstoffen in einem Spaltgasofen erzeugt. Solche Spaltgasöfen sind mit einer Anzahl von außen beheizten Spaltgasrohren versehen, durch welche die eingesetzten Kohlenwasserstoffe unter Zusatz von Wasserdampf geführt werden. Das erzeugte Spaltgas verlässt die Spaltgasrohre mit einer Temperatur von bis zu 900°C und muss zur Stabilisierung seiner molekularen Zusammensetzung sehr schnell abgekühlt werden. Die schnelle Abkühlung des Spaltgases erfolgt in Spaltgaskühlern durch eine indirekte Wärmeübertragung von dem Spaltgas an verdampfendes, unter einem hohen Druck stehendes Wasser.

Bei der aus DE 195 31 330 C2 bekannten Rohrverbindung ist das Ende des ungekühlten Rohres mit einem Eintrittskopf versehen, der im Querschnitt gabelförmig ausgebildet ist und einen inneren und einen äußeren Rohrabschnitt aufweist. Der ausgebildete Zwischenraum zwischen den beiden Rohrabschnitten ist mit einem wärmeisolierenden Material gefüllt. Der äußere Rohrabschnitt ist mit dem Mantelrohr des gekühlten Doppelrohres verschweißt. Der innere Rohrabschnitt steht dem Innenrohr des gekühlten Doppelrohres in einem axialen Abstand gegenüber, wobei zwischen den Stirnseiten des inneren Rohrabschnittes und des Innenrohres eine als Ring (C, O, U oder V Form) ausgebildete Dichtung liegt, die ein Eindringen von Spaltgas in das wärmeisolierende Material verhindern soll.

Ein gabelförmiger, mit wärmeisolierendem Material gefüllter Eintrittskopf zur Verbindung eines ungekühlten Rohres mit einem gekühlten Rohr wird auch bei dem aus EP 810 414 B1 bekannten Wärmetauscher zur Kühlung von Spaltgas eingesetzt. Bei dem bekannten Wärmetauscher besteht das gekühlte Rohr aus einem Innenrohr, das in einem radialen Abstand von einem Mantelrohr umschlossen ist. Eine Wasserkammer zum Zuführen eines Kühlmittels umgibt das Eintrittsende des gekühlten Rohres. Die Wasserkammer besteht aus einem massiven, viereckigen Stück, in das eine im Querschnitt kreisförmige Vertiefung oder Ausdrehung eingebracht ist. Die Ausdrehung nimmt ein einziges gekühltes Rohr auf, wobei das Innenrohr des gekühlten Rohres in den Boden der Ausdrehung eingeschweißt und das Mantelrohr mit der Wasserkammer verschweißt ist. Der äußere Rohrabschnitt des Eintrittskopfes ist auf der dem Mantelrohr abgewandten Seite an die Wasserkammer angeschweißt, während der innere Rohrabschnitt des Eintrittskopfes dem Innenrohr des gekühlten Rohres in einem axialen Abstand gegenübersteht.

Aus EP 2 151 652 B1 ist ein Wärmetauscher mit einem Verbindungsstück zwischen einem Spaltrohr eines Spaltofens und einem Kühlrohr eines Spaltgaskühlers bekannt. Dabei ist das Kühlrohr als Doppelrohr mit einem in der Verlängerung des Spaltrohres angeordneten Innenrohr und einem das Innenrohr unter Bildung eines Kühlzwischenraumes umschließenden Außenrohr ausgebildet. Der Kühlzwischenraum ist mit einer Zuführungskammer oder Wasserkammer zur Zuführung eines Kühlmediums verbunden. Weiterhin steht das Spaltrohr mit einem Übergangsstück oder Eintrittskopf in Verbindung, dessen Endabschnitt im Querschnitt gabelförmig ausgebildet ist und einen Innenabschnitt und einen Außenabschnitt aufweist, zwischen denen eine Schicht aus einem wärmeisolierenden Material eingebracht ist. Die Wasserkammer ist mit dem Eintrittskopf als eine Einheit ausgebildet. Ein Verfahren zum Verbinden eines Spaltrohres mit einem Kühlrohr ist angegeben.

Die bekannten Wärmetauscher mit den angeordneten Eintrittsköpfen lassen aufgrund des axialen Spiels zwischen dem Innenrohr und dem inneren Rohrabschnitt eine thermisch bedingte Längendehnung uneingeschränkt zu. Die eingebrachte Wärmeisolierung bewirkt, dass der äußere Rohrabschnitt des Eintrittskopfes, der fest mit dem gekühlten Rohr verbunden ist, eine Wandtemperatur annimmt, die unterhalb der Temperatur des durch das ungekühlte Rohr strömenden Gases liegt. Die Wandtemperaturen, welche die Rohre an der Verbindungsstelle erreichen, gleichen sich auf diese Weise aneinander an, so dass die Wärmespannungen an der Verbindungsstelle minimiert werden.

Eine wesentliche Aufgabe eines Gaseintrittskopfes bei einem Wärmetauscher besteht darin, eine Verbindung zwischen einem Spaltgasofen und einem Spaltgaskühler oder Wärmetauscher herzustellen. Eine Schwierigkeit der Aufgabe liegt darin begründet, dass zwei, verschiedene Werkstoffe unter hohen Temperaturen zusammenzubringen sind, nämlich ein Nickel-Basis-Werkstoff eines Spaltgasofens und ein Feinkornbaustahl oder C-Stahl einer Wasserkammer eines Spaltgaskühlers oder Wärmetauschers, und zwar ohne dass die unterschiedlichen Wärmeausdehnungskoeffizienten zu einem Versagen oder einer Undichtigkeit der Verbindung führen.

In der Technik ist bisher eine besondere Ausbildung für einen Gaseintrittskopf eines Wärmetauschers entwickelt worden, die für eine Schweißverbindung von Gaseintrittskopf und Wasserkammer mit den jeweils verschiedenen Werkstoffen eine verträgliche Temperaturdifferenz zulässt oder sicherstellt. Dabei ist bei einer solchen Schweißverbindung ein sogenannter C-Ring oder Dichtring wichtig, der beim Betrieb einer Anlage das Eindringen von Ethylen in den mit wärmeisolierendem Material ausgefüllten Zwischenraum eines Gaseintrittskopfes verhindern soll.

Ein Eindringen von Ethylen ist dann zu verhindern, wenn ein definierter Schweißschrumpf bei einer Schweißverbindung von einem Gaseintrittskopf an eine Wasserkammer eingehalten werden kann. Ein solcher definierter Schweißschrumpf ist dadurch sicherzustellen, dass ein Gaseintrittskopf ohne Luftspalt mit einer etwa 3mm dicken Schweißlippe an eine Wasserkammer angebaut und angeschweißt wird. Dann wird stets ein definierter Schweißschrumpf erhalten. Nach dem Schweißen einer solchen Schweißnahtverbindung verbleibt jedoch ein Restbereich von einer etwa 3mm dicken Schweißlippe bestehen, die an einem Gaseintrittskopf ausgebildet und nicht verschweißt ist. Es handelt sich um eine nichtdurchgeschweißte Schweißnaht.

Der Erfindung liegt die Aufgabe zugrunde, den gattungsgemäßen Wärmetauscher mit einer Rohrverbindung zwischen einem ungekühlten und gekühlten Rohr so zu gestalten, dass die Schweißnahtverbindung von einem Gaseintrittskopf an eine Wasserkammer voll durchgeschweißt ist, ohne dass ein Restbereich der Schweißnahtverbindung verbleibt, der nicht durchgeschweißt ist. Weiterhin besteht eine Aufgabe darin, ein Verfahren zu schaffen, das bei einem Wärmetauscher eine Schweißnahtverbindung von einem Gaseintrittskopf an eine Wasserkammer durch eine volldurchgeschweißte Schweißnaht sicherstellt.

Die zugrundeliegende Aufgabe wird bei einem gattungsgemäßen Wärmetauscher, der eine Rohrverbindung zwischen einem ungekühlten und gekühlten Rohr umfasst, erfindungsgemäß durch die Merkmale des Patentanspruchs 1 gelöst. Vorteilhafte Ausgestaltungen der Erfindung sind Gegenstand von Unteransprüchen.

Als besonders vorteilhaft hat sich erwiesen, dass ein als Schweißbadsicherungsring ausgeführter Ring zwischen einer Stirnseite eines Kühlzwischenraumes von einem Gaseintrittskopf und einer WK-Bodenstirnseite einer Wasserkammer angeordnet ist. Ein weiterer Vorteil ist darin zu sehen, dass der Schweißbadsicherungsring in einer angebrachten Ausdrehung oder Nut in der Isolierschicht aus wärmeisolierendem Material auf der Stirnseite des Kühlzwischenraumes angeordnet ist und an einer Rohrinnenfläche des GE-Rohraußenteils anliegt. In bevorzugter Weise ist vorgesehen, dass die Isolierschicht und der Schweißbadsicherungsring einen geringen Überstand von 0,3-1,3mm über Schweißkante des Gaseintrittskopfes aufweisen. Ein Überstand von 0,5mm ist bevorzugt.

Weiter besteht ein großer Vorteil darin, dass der Schweißbadsicherungsring fest in der Isolierschicht aus wärmeisolierendem Material auf der Stirnseite des Kühlzwischenraumes eingebettet und an eine Rohrinnenfläche des GE-Rohraußenteils eingepresst ist.

Ein weiterer Vorteil ist darin zu sehen, dass der Schweißbadsicherungsring auf der Stirnseite gegenüber der Rohrinnenfläche des GE-Rohraußenteils mit einer konkavförmigen Ausnehmung versehen ist. Weiter weist vorteilhaft ein ringförmiges Endstück am auslaufenden Ende des GE-Rohraußenteils auf der Stirnseite des Kühlzwischenraumes und die WK-Bodenstirnseite der Wasserkammer jeweils gegenüberliegend eine ausgebildete GE-/WK-Schweißlippe mit einer Stegbreite von 0,5-1,5mm auf.

In bevorzugter Weise ist der Schweißbadsicherungsring auf der Stirnseite gegenüber der Rohrinnenfläche des GE-Rohraußenteils mit einer konkavförmigen Ausnehmung mit einem Radius von 0,5mm versehen. Ein Vorteil besteht darin, dass das Endstück am auslaufenden Ende des GE-Rohraußenteils auf der Stirnseite der Kühlzwischenraumes und die WK-Bodenstirnseite der Wasserkammer jeweils gegenüberliegend eine ausgebildete GE-/WK-Schweißlippe mit einer Stegbreite von 1,0mm aufweisen.

Ein besonderer Vorteil besteht darin, dass der Schweißbadsicherungsring und der GE-Rohraußenteil sowie die WK-Bodenstirnseite mit jeweils gegenüberliegend ausgebildeter Schweißlippe mit der Wasserkammer im Vollanschluss ohne Restspalt mit vollständig durchgeschweißter Schweißnaht verschweißt sind.

Ein weiterer Vorteil zeigt sich darin, dass der Schweißbadsicherungsring aus einem keramischen oder metallischen Material gefertigt und als Dichtring und Isolierring ausgebildet ist.

Die zugrundeliegende Aufgabe eines Verfahrens wird bei einem Wärmetauscher mit einer Rohrverbindung zwischen einem ungekühlten und gekühlten Rohr erfindungsgemäß durch die Merkmale des Patentanspruchs 7 gelöst. Vorteilhafte Ausgestaltungen der Erfindung sind Gegenstand von Unteransprüchen.

Bei einem Verfahren zum Verbinden einer Rohrverbindung zwischen einem ungekühlten und einem gekühlten Rohr ist als besonders vorteilhaft anzusehen, dass ein Gaseintrittskopf mit einem in einer eingebrachten Isolierschicht im Kühlzwischenraum eingebetteten, an einer Rohrinnenfläche eines GE-Rohraußenteils anliegenden Schweißbadsicherungsring in eine herkömmliche Vorrichtung zum Vorbereiten einer Schweißnaht eingespannt wird. Ein Vorteil zum Vorbereiten einer Schweißnahtverbindung besteht darin, dass der Gaseintrittskopf an eine Wasserkammer ohne Luftspalt auf eine am ringförmigen Endstück vom GE-Rohraußenteil auf einer Stirnseite des Kühlzwischenraumes vom Gaseintrittskopf ausgebildete GE-Schweißlippe und auf eine der GE-Schweißlippe gegenüberliegend an einer WK-Bodenstirnseite einer Wasserkammer ausgeformte WK-Schweißlippe angesetzt wird. Ein weiterer Vorteil zeigt sich darin, dass eine erste Schweißlage der Schweißnaht mit einem MAG-Schweißbrenner und einem MAG-Schweißdraht mit einem Schweißzusatzwerkstoff für einen Wurzelschutz ausgeführt wird. Vorteilhaft wird die sich auf der Oberseite der ersten Schweißlage gebildete Schweißschlacke mechanisch vollständig entfernt. Weiterhin ist ein Vorteil darin zu sehen, dass die verbleibende Schweißnaht über der ersten Schweißlage in einem Durchgang mit 2n-Schweißlagen oder Schweißraupen mit einem üblichen Schweißwerkstoff verschweißt und aufgefüllt wird, wobei n=1-12 ist, bevorzugt ist n=3-8.

Von Vorteil ist weiterhin, dass der Schweißbadsicherungsring in eine vorgesehene Ausdrehung oder Nut in der Isolierschicht aus wärmeisolierendem Material auf der Stirnseite eingebracht wird, wobei der Schweißbadsicherungsring und die Isolierschicht mit einem kleinen Überstand von 0,3-1,3mm über Schweißkante des Gaseintrittskopfes angesetzt werden. Ein Überstand von 0,5mm wird bevorzugt.

Vorteilhaft wird der Gaseintrittskopf an die Wasserkammer mit einer herkömmlichen, nicht dargestellten Vorrichtung angesetzt und der Gaseintrittskopf an der Schweißposition positioniert und mit der überstehenden Isolierschicht aus wärmeisolierendem Material und dem überstehenden Schweißbadsicherungsring ohne einen verbleibenden Luftspalt an die Wasserkammer gepresst und an drei bis vier Stellen der vorgesehenen Schweißnaht heftgeschweißt.

Vorteilhafterweise wird die vorbereitete Rohrverbindung einem herkömmlichen, nicht dargestellten Schweißautomaten zugeführt und mit einem Drei-/Vier-Backenfutter auf der GE-Innenseite des Gaseintrittskopfes gespannt und ein erster Schweißbrenner in die Schweißfuge der vorgesehenen Schweißnaht geführt.

Ein wesentlicher Vorteil besteht darin, dass die erste Schweißlage mit einem Metallschweißverfahren mit aktiven Gasen und einem Schweißzusatzwerkstoff mit einer starken Schlackenbildung durchgeführt wird, wobei die sich bildende Schlacke zwischen das sich bildende Schmelzbad und den Schweißbadsicherungsring ausgebildet und die sich bildende Schmelze vor Luftsauerstoff durch die sich bildende Schlacke geschützt wird.

Nach Schweißen der ersten Schweißlage oder einer Wurzellage wird vorteilhaft die sich abgelagerte Schweißschlacke auf der Oberseite der ersten Schweißlage mechanisch vollständig entfernt und die verbleibende Schweißnaht mit einem zweiten Schweißbrenner des Schweißautomaten und einem herkömmlichen Schweißwerkstoff in einem Durchgang mit 2n-Schweißlagen oder Schweißraupen verschweißt und aufgefüllt, wobei n=1-12 ist, bevorzugt ist n=3-8.

Die verbleibende Schweißnaht wird vorzugsweise mit einem Schweißwerkstoff aus Massivdraht in einem Durchgang mit 2n-Schweißlagen oder Schweißraupen verschlossen und aufgefüllt.

Weitere Vorteile und Einzelheiten der Erfindung sind in einem Ausführungsbeispiel anhand der Zeichnung dargestellt und nachfolgend erläutert. Es zeigen:
Fig. 1 einen Längsschnitt im verkleinerten Maßstab durch den unteren Teil eines Wärmetauschers mit einer Rohrverbindung gemäß der Erfindung und
Fig.2 eine Einzelheit Z nach Fig. 1 in vergrößertem Maßstab vor einem Verschweißen.

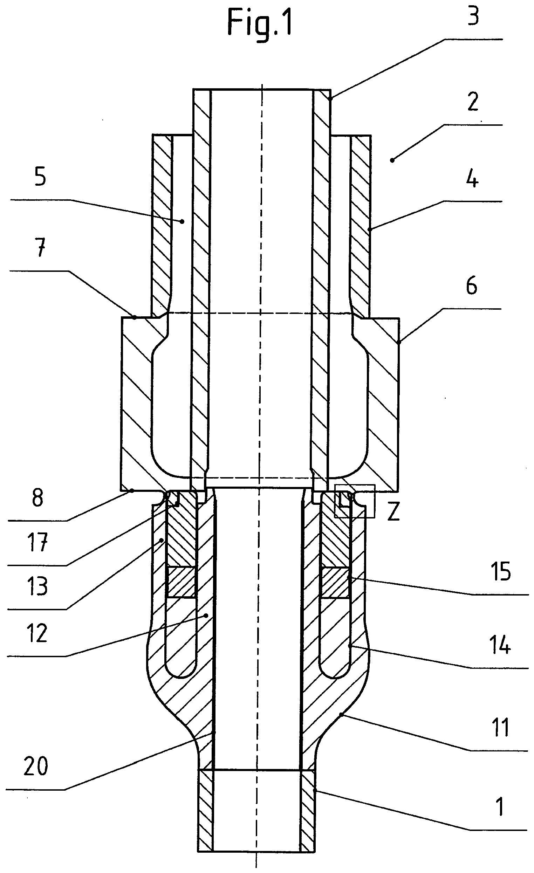

Die Fig. 1 zeigt einen Längsschnitt durch den unteren Teil eines nicht dargestellten Wärmetauschers mit einer Rohrverbindung zwischen einem ungekühlten Rohr 1 und einem gekühlten Rohr 2. Das gekühlte Rohr 2 ist als Doppelrohr ausgeführt und besteht aus einem gekühlten Innenrohr 3 und einem Mantelrohr 4. Das Innenrohr 3 ist von dem Mantelrohr 4 mit radialem Abstand unter Bildung eines von einem Kühlmedium durchströmten Rohrzwischenraumes 5 umgeben.

Das gekühlte Rohr 2 steht mit dem ungekühlten Rohr 1 über eine Wasserkammer 6 -kurz WK- und einen mit dem ungekühlten Rohr verbundenen, im Querschnitt gabelförmigen Gaseintrittskopf 11 -kurz GE- in Verbindung. Der Gaseintrittskopf 11 ist bündig mit seiner GE-Innenseite 20 auf das ungekühlte Rohr 1 ausgerichtet und weist einen GE-Rohrinnenteil 12 und einen GE-Rohraußenteil 13 auf. Zwischen dem GE-Rohrinnenteil 12 und dem GE-Rohraußenteil 13 ist ein Kühlzwischenraum 14 ausgebildet, in den eine Isolierschicht 15 aus einem wärmeisolierenden Material eingebracht ist.

Der GE-Rohraußenteil 13 des Gaseintrittskopfes 11 ist mit dem Mantelrohr 4 des gekühlten Rohres 2 auf einer WK-Stirnseite 7 über die Wasserkammer 6 verbunden. Der GE-Rohrinnenteil 12 des Gaseintrittskopfes 11 steht auf einer WK-Bodenstirnseite 8 der Wasserkammer 6 dem gekühlten Innenrohr 3 mit einem axialen Abstand von etwa 0,3-1,3mm gegenüber.

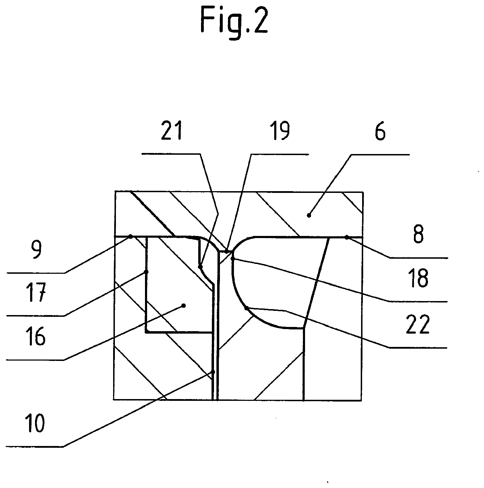

Wie in Fig. 2 gezeigt ist auf einer Stirnseite 9 des Kühlzwischenraums 14 in der eingebrachten Isolierschicht 15 aus wärmeisolierendem Material ein Schweißbadsicherungsring 16 angeordnet, der an einer Rohrinnenfläche 10 des GE-Rohraußenteils 13 anliegt.

Der Schweißbadsicherungsring 16 ist in einer angebrachten Ausdrehung oder Nut 17 in der Isolierschicht 15 aus wärmeisolierendem Material auf der Stirnseite 9 des Kühlzwischenraumes 14 angeordnet und liegt an einer Rohrinnenfläche 10 des GE-Rohraußenteils 13 an. Die Isolierschicht 15 aus wärmeisolierendem Material und der Schweißbadsicherungsring 16 weisen einen geringen Überstand von 0,3-1,3mm über Schweißkante des Gaseintrittskopfes 11 auf der Stirnseite 9 des Kühlzwischenraums 14 auf. Bevorzugt ist ein Überstand von 0,5mm.

Der Schweißbadsicherungsring 16 ist fest in der Isolierschicht 15 aus wärmeisolierendem Material auf der Stirnseite 9 des Kühlzwischenraumes 14 eingebettet und an der Rohrinnenfläche 10 des GE-Rohraußenteils 13 eingepresst.

Der Schweißbadsicherungsring 16 ist auf der Stirnseite 9 des Kühlzwischenraums 14 anliegend an der Rohrinnenfläche 10 des Rohraußenteils 13 mit einer konkavförmigen Ausnehmung 21 versehen. Auf der Stirnseite 9 des Kühlzwischenraums 14 des Gaseintrittskopfes 11 ist am auslaufenden Endstück 22 des GE-Rohraußenteils 13 eine umlaufende GE-Schweißlippe 18 in der Form eines Steges vorgesehen. An der WK-Bodenstirnseite 8 der Wasserkammer 6 ist ebenfalls eine umlaufende WK-Schweißlippe 19 ausgeformt. Die jeweiligen GE-/WK-Schweißlippen 18, 19 sind gegenüberliegend angeordnet und jeweils mit einer Stegbreite von 0,5-1,5mm ausgebildet. Bevorzugt ist eine Stegbreite von 1,0mm.

Weiterhin sind der Schweißbadsicherungsring 16 und der GE-Rohraußenteil 13 des Gaseintrittskopfes 11 und die WK-Bodenstirnseite 8 der Wasserkammer 6 mit jeweils angebrachter umlaufender GE-/WK-Schweißlippe 18, 19 im Vollanschluss ohne einen Restspalt mit vollständig durchgeschweißter Schweißnaht mit der Wasserkammer 6 durch ein Verschweißen mit einem MAG-Schweißbrenner unter Verwenden eines schlackenführenden Schweißzusatzwerkstoffs für die erste Schweißlage oder Wurzellage und vollständiges Entfernen der Schweißschlacke auf der ersten Schweißlage und Auffüllen der verbleibenden Schweißnaht mit 2n-Schweißlagen oder Schweißraupen eines Schweißbrenners mit einem üblichen Schweißwerkstoff ohne einen Schweißzusatz verbunden, wobei n=1-12 ist und bevorzugt n=3-8 ist.

Der Schweißbadsicherungsring 16, der aus einem keramischen oder metallischen Material besteht, ist als Dichtring und Isolierring ausgebildet.

Bei einem Verfahren zum Verbinden einer Rohrverbindung zwischen einem ungekühlten Rohr 1 und einem gekühlten Rohr 2 eines nicht dargestellten Wärmetauschers wird in einem ersten Schritt ein Gaseintrittskopf 11 auf eine herkömmliche, nicht dargestellte Vorrichtung aufgebaut, wobei zwischen einem GE-Rohrinnenteil 12 und einem GE-Rohraußenteil 13 ein Kühlzwischenraum 14 ausgebildet ist, in welchem eine Isolierschicht 15 aus wärmeisolierenden Material eingebracht ist.

In einem zweiten Schritt wird ein Schweißbadsicherungsring 16 in eine angebrachte Ausdrehung oder Nut 17 in der Isolierschicht 15 aus wärmeisolierendem Material auf eine Stirnseite 9 des Kühlzwischenraumes 14 eingebettet, wobei die Isolierschicht 15 aus wärmeisolierendem Material und der Schweißbadsicherungsring 16 einen kleinen Überstand von ungefähr 0,3-1,3mm über der Schweißkante des Gaseintrittskopfes 11 aufweisen, vorzugsweise ist ein Überstand von 0,5mm vorgesehen.

In einem dritten Schritt wird der Gaseintrittskopf 11 an die Wasserkammer 6 ohne Luftspalt mit einer herkömmlichen, nicht dargestellten Vorrichtung angesetzt. Eine angebrachte GE-Schweißlippe 18 am auslaufenden Endstück 22 des GE-Rohraußenteils 13 des Gaseintrittskopfes 11 wird auf eine an einer gegenüberliegenden WK-Bodenstirnseite 8 der Wasserkammer 6 ausgebildete WK-Schweißlippe 19 ausgerichtet und an einer Schweißlage positioniert und an drei bis vier Stellen im Umfangsbereich einer Schweißrundnaht der Schweißlage heftgeschweißt. Mit Hilfe einer nicht dargestellten Vorrichtung werden die mit kleinem Überstand von ungefähr 0,5mm angebrachte Isolierschicht 15 und der mit kleinem Überstand von etwa 0,5mm vorgesehene Schweißbadsicherungsring 16 ohne einen verbleibenden Luftspalt an die Wasserkammer 6 gepresst.

Ein solches Ansetzen des Gaseintrittskopfes 11 an die Wasserkammer 6 wird bei einem bekannten Wolfram-Inert-Gas-Schweißverfahren verhindert, weil kein Formiergas an den Wurzelbereich für den notwendigen Wurzelschutz der Wurzelschweißnaht geleitet werden kann.

Nach dem Ansetzen des Gaseintrittskopfes 11 an die Wasserkammer 6 und Heftschweißen an drei bis vier Stellen im Umfangsbereich der Schweißlage wird das Bauteil einem nicht dargestellten, herkömmlichen Schweißautomaten zugeführt und mit einem Drei-/Vier-Backenfutter auf einer GE-Innenseite 20 des Gaseintrittskopfes gespannt.

Der nicht dargestellte Schweißautomat führt unter Abtastung einen nicht dargestellten Metall-Aktiv-Gas-Schweißbrenner oder MAG-Schweißbrenner in die vorbereitete Schweißfuge der Schweißnaht. Die Schweißnaht wird dadurch vorbereitet, dass die auf dem auslaufenden Endstück 22 des Rohraußenteils 13 des Gaseintrittskopfes 11 ausgebildete GE-Schweißlippe 18 mit einer Stegbreite von 1,0mm und das Gegenstück der auf einer WK-Bodenstirnseite 8 der Wasserkammer 6 ausgeformten WK-Schweißlippe 19 ebenfalls mit einer Stegbreite von 1,0mm aufeinander ausgerichtet werden.

Die erste Schweißlage wird mit dem MAG-Schweißbrenner und einem MAG-Schweißdraht mit einem Schweißzusatzwerkstoff für eine starke Schlackenbildung oder als schlackenführend ausgeführt, wobei die sich bildende Schweißschlacke zwischen das sich bildende Schmelzbad und den Schweißbadsicherungsring 16 ausgebildet wird. Infolge der sich ausbildenden Schweißschlacke wird die sich bildende Schmelze vor einem Luftsauerstoff geschützt, so dass eine Reaktion mit Luftsauerstoff verhindert wird. Die erste Schweißlage wird ausschließlich mit einem MAG-Schweißdraht mit Schweißzusatzwerkstoff geschweißt.

In einem weiteren Schritt wird nach dem Schweißen der ersten Schweißlage die sich auf der Oberseite der ersten Schweißlage gebildete Schweißschlacke mechanisch vollständig entfernt.

Der Schweißbrenner wird vom Schweißroboter mit einem üblichen Schweißwerkstoff erneut in der Schweißlage positioniert, und die verbleibende Schweißnaht über der ersten Schweißlage wird in einem Durchgang mit 2n-Schweißlagen oder Schweißraupen mit üblichem Schweißwerkstoff, bevorzugt ist ein Massivdraht, verschweißt und aufgefüllt, wobei n=1-12, bevorzugt n=3-8 ist.

Mit dem Verfahren wird erreicht und sichergestellt, dass der Gaseintrittskopf 11 an die Wasserkammer 6 eines Wärmetauschers an der kritischen Stelle der Rohrverbindung eines ungekühlten Rohres 1 mit einem gekühlten Rohr 2 volldurchgeschweißt wird, ohne dass ein Restbereich einer nicht ganz durchgeschweißten Schweißnaht verbleibt.

Weiter wird mit dem Verfahren gewährleistet, dass ein stetig definierter Schweißschrumpf bei der Schweißverbindung von einem GE-Rohraußenteil eines Gaseintrittskopfes an eine Wasserkammer eingehalten werden kann. Ein solcher definierter Schweißschrumpf ist sichergestellt, indem ein Gaseintrittskopf mit einer am auslaufenden Endstück eines GE-Rohraußenteils angebrachten GE-Schweißlippe auf eine gegenüberliegend an einer WK-Bodenstirnseite angeordnete WK-Schweißlippe mit jeweils 0,5-1,5mm Stegbreite, vorzugsweise 1,0mm, ausgerichtet und ohne Luftspalt an eine Wasserkammer angebaut und angeschweißt wird.

## Patentansprüche

1. Wärmetauscher zum Kühlen von Spaltgas umfassend eine Rohrverbindung zwischen einem ungekühlten Rohr (1) und einem gekühlten Rohr (2), wobei das gekühlte Rohr als Doppelrohr ausgeführt ist und aus einem gekühlten Innenrohr (3) und einem Mantelrohr (4) besteht, wobei das Innenrohr (3) von dem Mantelrohr (4) mit radialem Abstand unter Bildung eines von einem Kühlmedium durchströmten Rohrzwischenraumes (5) umgeben ist, wobei das gekühlte Rohr (2) mit dem ungekühlten Rohr (1) über eine Wasserkammer (6) und einen mit dem ungekühlten Rohr verbundenen, im Querschnitt gabelförmigen Gaseintrittskopf (11) in Verbindung steht, wobei der Gaseintrittskopf (11) einen GE-Rohrinnenteil (12) und einen GE-Rohraußenteil (13) aufweist, wobei zwischen dem GE-Rohrinnenteil (12) und dem GE-Rohraußenteil (13) ein Kühlzwischenraum (14) ausgebildet ist, der mit einer Isolierschicht (15) aus einem wärmeisolierenden Material ausgefüllt ist, wobei der GE-Rohraußenteil (13) über die Wasserkammer (6) mit dem Mantelrohr (4) auf einer WK-Stirnseite (7) verbunden ist, wobei der GE-Rohrinnenteil (12) auf einer WK-Bodenstirnseite (8) der Wasserkammer (6) dem Innenrohr (3) mit einem geringen axialen Abstand gegenübersteht, wobei ein als Schweißbadsicherungsring (16) ausgeführter Ring zwischen einer Stirnseite (9) des Kühlzwischenraumes (14) und einer WK-Bodenstirnseite (8) der Wasserkammer (6) angeordnet ist, **dadurch gekennzeichnet, dass** der Schweißbadsicherungsring (16) in der Isolierschicht (15) des Kühlzwischenraumes (14) eingebracht ist, dass der Schweißbadsicherungsring (16) in einer angebrachten Ausdrehung oder Nut (17) in der Isolierschicht (15) auf der Stirnseite (9) des Kühlzwischenraumes (14) angeordnet ist und an einer Rohrinnenfläche (10) des GE-Rohraußenteils (13) anliegt, dass die Isolierschicht (15) und der Schweißbadsicherungsring (16) einen geringen Überstand von 0,3-1,3mm über Schweißkante des Gaseintrittskopfes (11) aufweisen.

2. Wärmetauscher nach Anspruch 1, **dadurch gekennzeichnet, dass** der Schweißbadsicherungsring (16) fest in der Isolierschicht (15) auf der Stirnseite (9) des Kühlzwischenraumes (14) eingebettet und an die Rohrinnenfläche (10) des GE-Rohraußenteils (13) eingepresst ist.

3. Wärmetauscher nach Anspruch 1, **dadurch gekennzeichnet, dass** der Schweißbadsicherungsring (16) auf der Stirnseite (9) gegenüber der Rohrinnenfläche (10) mit einer konkavförmigen Ausnehmung (21) versehen ist und dass ein ringförmiges Endstück (22) am auslaufenden Ende des GE-Rohraußenteils (13) auf der Stirnseite (9) des Kühlzwischenraumes (14) und die WK-Bodenstirnseite (8) der Wasserkammer (6) jeweils gegenüberliegend eine ausgebildete GE-/WK-Schweißlippe (18, 19) mit einer Stegbreite von 0,5-1,5mm aufweisen.

4. Wärmetauscher nach Anspruch 3, **dadurch gekennzeichnet, dass** der Schweißbadsicherungsring (16) auf der Stirnseite (9) gegenüber der Rohrinnenfläche (10) mit einer konkavförmigen Ausnehmung (21) mit einem Radius von 0,5mm ausgeformt ist und dass der GE-Rohraußenteil (13) auf der Stirnseite (9) des Kühlzwischenraumes (14) und die WK-Bodenstirnseite (8) der Wasserkammer (6) jeweils gegenüberliegend die ausgebildete GE-/WK-Schweißlippe (18, 19) mit einer Stegbreite von 1,0mm aufweisen.

5. Wärmetauscher nach Anspruch 3, **dadurch gekennzeichnet, dass** der Schweißbadsicherungsring (16) und der GE-Rohraußenteil (13) und die WK-Bodenstirnseite (8) mit jeweils gegenüberliegend ausgebildeter GE-/WK-Schweißlippe (18, 19) mit der Wasserkammer (6) im Vollanschluss ohne Restspalt mit vollständig durchgeschweißter Schweißnaht verschweißt sind.

6. Wärmetauscher nach Anspruch 1, **dadurch gekennzeichnet, dass** der Schweißbadsicherungsring (16) aus einem keramischen oder metallischem Material gefertigt und als Dichtring und Isolierring ausgebildet ist.

7. Verfahren zum Verbinden eines ungekühlten Rohres (1) und eines gekühlten Rohres (2) eines Wärmetauschers zum Kühlen von Spaltgas mit einer Rohrverbindung zwischen dem ungekühlten Rohr und gekühlten Rohr nach Anspruch 1, **dadurch gekennzeichnet, dass** ein Gaseintrittskopf (11) mit einem in einer eingebrachten Isolierschicht (15) im Kühlzwischenraum (14) eingebetteten, an einer Rohrinnenfläche (10) eines GE-Rohraußenteils (13) anliegenden Schweißbadsicherungsring (16) in eine herkömmliche Vorrichtung zum Vorbereiten einer Schweißnahtverbindung vom Gaseintrittskopf (11) an eine Wasserkammer (6) eingespannt wird, dass der Gaseintrittskopf (11) an die Wasserkammer (6) ohne Luftspalt auf eine am ringförmigen Endstück (22) vom GE-Rohraußenteil (13) auf einer Stirnseite (9) des Kühlzwischenraums (14) vom Gaseintrittskopf (11) ausgeformte GE-Schweißlippe (18) und auf eine der GE-Schweißlippe gegenüberliegend an einer WK-Bodenstirnseite (8) der Wasserkammer (6) ausgebildete WK-Schweißlippe (19) angesetzt wird, dass eine erste Schweißlage mit einem MAG-Schweißbrenner und einem MAG-Schweißdraht mit einem Schweißzusatzwerkstoff für einen Wurzelschutz ausgeführt wird, dass die sich auf der Oberseite der ersten Schweißlage gebildete Schweißschlacke mechanisch vollständig entfernt wird und dass die verbleibende Schweißnaht über der ersten Schweißlage in einem Durchgang in 2n-Schweißlagen oder Schweißraupen mit einem üblichen Schweißwerkstoff verschweißt und aufgefüllt wird.

8. Verfahren nach Anspruch 7, **dadurch gekennzeichnet, dass** der Schweißbadsicherungsring (16) in die vorgesehene Ausdrehung oder Nut (17) in der Isolierschicht (15) aus wärmeisolierendem Material auf der Stirnseite (9) eingebracht wird, wobei der Schweißbadsicherungsring und die Isolierschicht mit einem kleinen Überstand von 0,3-1,3mm über Schweißkante des Gaseintrittskopfes (11) angeordnet werden.

9. Verfahren nach Anspruch 8, **dadurch gekennzeichnet, dass** der Schweißbadsicherungsring (16) und die Isolierschicht (15) mit einem kleinen Überstand von 0,5mm über Schweißkante des Gaseintrittskopfes (11) eingebracht werden.

10. Verfahren nach Anspruch 9, **dadurch gekennzeichnet, dass** der Gaseintrittskopf (11) an die Wasserkammer (6) mit einer herkömmliche Vorrichtung angesetzt wird, dass der Gaseintrittskopf (11) an der Schweißposition positioniert wird, dass der Gaseintrittskopf (11) mit der überstehenden Isolierschicht (15) und dem überstehenden Schweißbadsicherungsring (16) ohne einen verbleibenden Luftspalt an die Wasserkammer (6) gepresst und an drei bis vier Stellen der vorgesehenen Schweißnaht heftgeschweißt wird.

11. Verfahren nach Anspruch 10, **dadurch gekennzeichnet, dass** die vorbereitete Rohrverbindung einem herkömmlichen Schweißautomaten zugeführt und mit einem Drei- oder Vier-Backenfutter auf einer GE-Innenseite (20) des Gaseintrittskopfes (11) gespannt und ein erster Schweißbrenner des Schweißautomaten in die Schweißfuge der Schweißnaht geführt wird.

12. Verfahren nach Anspruch 11, **dadurch gekennzeichnet, dass** die erste Schweißlage mit einem Metallschweißverfahren mit aktiven Gasen und einem Schweißzusatzwerkstoff mit einer starken Schlackenbildung durchgeführt wird, wobei die sich bildende Schweißschlacke zwischen das sich bildende Schmelzbad und den Schweißbadsicherungsring (16) ausgebildet und die sich bildende Schmelze vor Luftsauerstoff durch die sich bildende Schweißschlacke geschützt wird.

13. Verfahren nach Anspruch 12, **dadurch gekennzeichnet, dass** nach Schweißen der ersten Schweißlage die sich abgelagerte Schweißschlacke auf der Oberseite der Schweißlage mechanisch vollständig entfernt wird, dass die verbleibende Schweißnaht mit einem zweiten Schweißbrenner des Schweißautomaten und einem üblichen Schweißwerkstoff in einem Durchgang mit 2n-Schweißlagen oder Schweißraupen verschweißt und aufgefüllt wird.

14. Verfahren nach Anspruch 13, **dadurch gekennzeichnet, dass** die verbleibende Schweißnaht mit einem Massivdraht in einem Durchgang mit 2n-Schweißlagen oder Schweißraupen verschlossen und aufgefüllt wird, wobei n=1-12 ist.

15. Verfahren nach Anspruch 14, **dadurch gekennzeichnet, dass** die verbleibende Schweißnaht mit einem Massivdraht in einem Durchgang mit 2n-Schweißlagen oder Schweißraupen verschlossen und aufgefüllt wird, wobei n=3-8 ist.

## Claims

1. Heat exchanger for cooling cracked gas comprising a tube connection between an uncooled tube (1) and a cooled tube (2), wherein the cooled tube is configured as a double tube and it consists of a cooled inner tube (3) and a jacket tube (4), the inner tube (3) being enclosed by the jacket tube (4) at a radial distance, forming a tube intermediate space (5), through which a cooling medium flows, wherein the cooled tube (2) is in connection with the uncooled tube (1) via a water chamber (6) and via a gas inlet header (11) that is connected to the uncooled tube and is forked in cross section, wherein the gas inlet header (11) has a GI tube inner part (12) and a GI tube outer part (13), and a cooling intermediate space (14), which is filled with an insulating layer (15) consisting of a heat-insulating material, is formed between the GI tube inner part (12) and the GI tube outer part (13), wherein the GI tube outer part (13) is connected via the water chamber (6) to the jacket tube (4) on a WC end face (7), wherein the GI tube inner part (12) faces the inner tube (3) at a short axial distance on a WC bottom end face (8) of the water chamber (6), wherein a ring configured as a weld pool backing ring (16) is arranged between an end face (9) of the cooling intermediate space (14) and a WC bottom end face (8) of the water chamber (6), **characterized in that** the weld pool backing ring (16) is inserted into the insulating layer (15) of the cooling intermediate space (14), that the weld pool backing ring (16) is arranged in a mounted turn-out or groove (17) in the insulating layer (15) on the end face (9) of the cooling intermediate space (14) and is in contact with a tube inner surface (10) of the GI tube outer part (13), and that the insulating layer (15) and the weld pool backing ring (16) have a short overhang of 0.3 mm to 1.3 mm over a welded edge of the gas inlet header (11).

2. Heat exchanger in accordance with claim 1, **characterized in that** the weld pool backing ring (16) is embedded firmly in the insulating layer (15) on the end face (9) of the cooling intermediate space (14) and is pressed onto the tube inner surface (10) of the GI tube outer part (13).

3. Heat exchanger in accordance with claim 1, **characterized in that** the weld pool backing ring (16) is provided with a concave recess (21) opposite the tube inner surface (10) on the end face (9), and that a ring-shaped end piece (22) at the discharging end of the GI tube outer part (13) on the end face (9) of the cooling intermediate space (14) and the WC bottom end face (8) of the water chamber (6) have, located opposite one another, a formed GI welding lip/WC welding lip (18, 19) with a web width of 0.5 mm to 1.5 mm.

4. Heat exchanger in accordance with claim 3, **characterized in that** the weld pool backing ring (16) is formed on the end face (9) towards the tube inner surface (10) with a concave recess (21) with a radius of 0.5 mm and that the GI tube outer part (13) on the end face (9) of the cooling intermediate space (14) and the WC bottom end face (8) of the water chamber (6) have, located opposite one another, the formed GI welding lip/WC welding lip (18, 19) with a web width of 1.0 mm.

5. Heat exchanger in accordance with claim 3, **characterized in that** the weld pool backing ring (16) and the GI tube outer part (13) and the WC bottom end face (8) with the formed GI welding lip/WC welding lip (18, 19) located opposite one another are welded together with the water chamber (6) with a fully welded-through weld seam in full connection without a remaining gap.

6. Heat exchanger in accordance with claim 1, **characterized in that** the weld pool backing ring (16) is made of a ceramic or metallic material and is configured as a sealing ring and as an insulating ring.

7. Process for connecting an uncooled tube (1) and a cooled tube (2) of a heat exchanger for cooling cracked gas with a tube connection between the uncooled tube and the cooled tube in accordance with claim 1, **characterized in that** a gas inlet header (11) with a weld pool backing ring (16), which is embedded in an inserted insulating layer (15) in the cooling intermediate space (14) and is in contact with a tube inner surface (10) of a GI tube outer part (13), is clamped into a conventional device for preparing a weld seam connection from the gas inlet header (11) to a water chamber (6), that the gas inlet header (11) at the water chamber (6) is attached without air gap to a GI welding lip (18) formed by the gas inlet header (11) at the ring-shaped end piece (22) by the GI tube outer part (13) on an end face (9) of the cooling intermediate space (14) and is attached to a WC welding lip (19) formed at a WC bottom end face (8) of the water chamber (6) located opposite the GI welding lip, that a first welding layer is prepared with an MAG welding torch and with an MAG welding wire with a welding filler material for a root protection, that the weld slag formed on the top side of the first welding layer is removed entirely mechanically, and that the remaining weld seam is welded or filled with a usual welding material over the first welding layer in a pass in 2n welding layers or welding beads.

8. Process in accordance with claim 7, **characterized in that** the weld pool backing ring (16) is inserted into the provided turn-out or groove (17) in the insulating layer (15) consisting of heat-insulating material on the end face (9), the weld pool backing ring and the insulating layer being arranged with a small overhang of 0.3 mm to 1.3 mm over the welded edge of the gas inlet header (11).

9. Process in accordance with claim 8, **characterized in that** the weld pool backing ring (16) and the insulating layer (15) are inserted with a small overhang of 0.5 mm over the welded edge of the gas inlet header (11).

10. Process in accordance with claim 9, **characterized in that** the gas inlet header (11) is attached to the water chamber (6) by means of a conventional device, that the gas inlet header (11) is positioned at the welding position, that the gas inlet header (11) is pressed onto the water chamber (6) with the protruding insulating layer (15) and the protruding weld pool backing ring (16) without a remaining air gap and is tack-welded at three to four points of the weld seam provided.

11. Process in accordance with claim 10, **characterized in that** the prepared tube connection is fed to a conventional automatic welding machine and clamped with a three-jaw or four-jaw chuck on a gas inlet inner side (20) of the gas inlet header (11), and a first welding torch of the automatic welding machine is guided into the weld joint of the weld seam.

12. Process in accordance with claim 11, **characterized in that** the first welding layer is prepared with a metal welding process with active gases and with a welding filler material with a strong slag formation, wherein the weld slag being formed is formed between the melt pool being formed and the weld pool backing ring (16) and the melt being formed is protected by the weld slag being formed against atmospheric oxygen.

13. Process in accordance with claim 12, **characterized in that** the deposited weld slag on the top side of the welding layer is removed entirely mechanically after welding of the first welding layer, that the remaining weld seam is welded and filled with a second welding torch of the automatic welding machine and with a usual welding material in a pass with 2n welding layers or weld beads.

14. Process in accordance with claim 13, **characterized in that** the remaining weld seam is closed and filled with a solid wire in a pass with 2n welding layers or weld beads, wherein n = 1-12.

15. Process in accordance with claim 14, **characterized in that** the remaining weld seam is closed and filled with a solid wire in a pass with 2n welding layers or weld beads, wherein n = 3-8.

## Revendications

1. Échangeur thermique, destiné à refroidir du gaz de craquage, comprenant un raccord tubulaire entre un tube (1) non refroidi et un tube (2) refroidi, le tube refroidi étant réalisé sous la forme d'un double-tube et étant constitué d'un tube interne (3) refroidi et d'un tube d'enveloppe (4), le tube interne (3) étant entouré par le tube d'enveloppe (4) avec un écart radial en constituant un espace intermédiaire (5) entre tubes, traversé par de l'agent réfrigérant, le tube (2) refroidi étant raccordé sur le tube (1) non refroidi par l'intermédiaire d'un compartiment à eau (6) et d'une tête d'entrée (11) de gaz raccordée sur le tube non refroidi, à section transversale en forme de fourche, la tête d'entrée (11) de gaz comportant une partie interne (12) de tube d'entrée de gaz et une partie externe (13) de tube d'entrée de gaz, entre la partie interne (12) de tube d'entrée de gaz et la partie externe (13) de tube d'entrée de gaz étant conçu un espace intermédiaire (14) de refroidissement, qui est rempli d'une couche isolante (15) en une matière calorifuge, la partie externe (13) de tube d'entrée de gaz étant raccordée par l'intermédiaire du compartiment à eau (6) avec le tube d'enveloppe (4) sur une face frontale (7) du compartiment à eau, sur une face frontale du fond (8) de compartiment à eau du compartiment à eau (6), la partie interne (12) de tube d'entrée de gaz étant placée au vis-à-vis du tube interne (3) avec un faible écart axial, une bague conçue sous la forme d'une bague de sécurisation (16) au soudage étant placée entre une face frontale (9) de l'espace intermédiaire (14) de refroidissement et une face frontale du fond (8) de compartiment à eau du compartiment à eau (6), **caractérisé en ce que** la bague de sécurisation (16) au soudage est incorporée dans la couche isolante (15) de l'espace intermédiaire (14) de refroidissement, **en ce que** la bague de sécurisation (16) au soudage est placée dans un alésage ou une rainure (17) dans la couche isolante (15) sur la face frontale (9) de l'espace intermédiaire (14) de refroidissement et est adjacente à une surface interne (10) de tube de la partie externe (13) de tube d'entrée de gaz, **en ce que** la couche isolante (15) et la bague de sécurisation (16) au soudage comportent un faible surplomb de 0,3 à 1,3 mm au-delà de l'arête de soudage de la tête d'entrée de gaz.

2. Échangeur thermique selon la revendication 1, **caractérisé en ce que** la bague de sécurisation (16) au soudage est fixement incorporée dans la couche isolante (15) sur la face frontale (9) de l'espace intermédiaire (14) de refroidissement et est emmanchée dans la surface interne (10) de tube de la partie externe (13) de tube d'entrée de gaz.

3. Échangeur thermique selon la revendication 1, **caractérisé en ce que** la bague de sécurisation (16) au soudage est munie sur la face frontale (9), au vis-à-vis de la surface interne (10) de tube d'un évidement (21) de forme concave et **en ce que** sur l'extrémité débouchante de la partie externe (13) de tube d'entrée de gaz, sur la face frontale (9) de l'espace intermédiaire (14) de refroidissement, une pièce d'extrémité (22) de forme annulaire et la face frontale du fond (8) de compartiment à eau du compartiment à eau (6) comportent, respectivement en vis-à-vis une lèvre de soudure (18, 19) définie d'entrée de gaz / de compartiment- à eau d'une largeur de cordon de 0,5 à 1,5 mm.

4. Échangeur thermique selon la revendication 3, **caractérisé en ce que** sur la face frontale (9), au vis-à-vis de la surface interne (10) de tube, la bague de sécurisation (16) au soudage est façonnée avec un évidement (21) de forme concave, d'un rayon de 0,5 mm et **en ce que** sur la face frontale (9) de l'espace intermédiaire (14) de refroidissement, la partie externe (13) de tube d'entrée de gaz et la face frontale du fond (8) du compartiment à eau du compartiment à eau (6) comportent, respectivement en vis-à-vis la lèvre de soudure (18, 19) définie d'entrée de gaz / de compartiment à eau d'une largeur de cordon de 1,0 mm.

5. Échangeur thermique selon la revendication 3, **caractérisé en ce que** la bague de sécurisation (16) au soudage et la partie externe (13) de tube d'entrée de gaz et la face frontale du fond (8) du compartiment à eau, pourvue chacune, respectivement en vis-à-vis d'une lèvre de soudure (18, 19) définie d'entrée de gaz / de compartiment à eau sont soudées avec le compartiment à eau (6) en jonction complète, sans interstice résiduel, avec un joint de soudure à fusion complète.

6. Échangeur thermique selon la revendication 1, **caractérisé en ce que** la bague de sécurisation (16) au soudage est fabriquée en une matière céramique ou métallique et est conçue sous la forme d'une bague d'étanchéité et d'une bague isolante.

7. Procédé, destiné à raccorder un tube (1) non refroidi et un tube (2) refroidi d'un échangeur thermique, destiné à refroidir du gaz de craquage, pourvu d'un raccord tubulaire entre le tube non refroidi et le tube refroidi selon la revendication 1, **caractérisé en ce que** l'on enserre une tête d'entrée (11) de gaz pourvue d'une bague de sécurisation (16) au soudage incorporée dans une couche isolante (15) introduite dans l'espace intermédiaire (14) de refroidissement, adjacente à une surface interne (10) de tube d'une partie externe (13) de tube d'entrée de gaz dans un dispositif conventionnel pour la préparation d'un raccordement soudé de la tête d'entrée (11) de gaz sur un compartiment à eau (6), **en ce que** l'on applique la tête d'entrée (11) de gaz sur le compartiment à eau (6) sans fente d'air sur une lèvre de soudure (18) d'entrée de gaz définie, façonnée sur la pièce d'extrémité (22) de forme annulaire de la partie externe (13) de tube d'entrée de gaz sur une face frontale (9) de l'espace intermédiaire (14) de refroidissement de la tête d'entrée (11) de gaz et sur une lèvre de soudure (19) de compartiment à eau conçue au vis à vis de la lèvre de soudure d'entrée de gaz, sur une face frontale du fond (8) de compartiment à eau du compartiment à eau (6), **en ce que** l'on réalise une première couche de soudure à l'aide d'une torche de soudage MAG et d'un fil de soudage MAG, avec un métal d'apport pour une protection des racines, **en ce que** l'on retire totalement par moyen mécanique les scories de soudage qui se sont formées sur la face supérieure de la première couche de soudure et **en ce que** l'on soude et l'on remplit le joint de soudure restant au-dessus de la première couche de soudure en un passage en 2n couches de soudure ou cordons de soudure avec une matière d'apport conventionnelle.

8. Procédé selon la revendication 7, **caractérisé en ce que** l'on introduit la bague de sécurisation (16) au soudage dans l'alésage ou la rainure (17) prévue dans la couche isolante (15) de matière calorifuge sur la face frontale (9), la bague de sécurisation au soudage et la couche isolante étant placées avec un petit surplomb de 0,3 à 1,3 mm au-delà de l'arête de soudage de la tête d'entrée (11) de gaz.

9. Procédé selon la revendication 8, **caractérisé en ce que** l'on introduit la bague de sécurisation (16) au soudage et la couche isolante (15) avec un petit surplomb de 0,5 mm au-delà de l'arête de soudage de la tête d'entrée (11) de gaz.

10. Procédé selon la revendication 9, **caractérisé en ce que** l'on applique la tête d'entrée (11) de gaz sur le compartiment à eau (6) à l'aide d'un dispositif conventionnel, **en ce que** l'on positionne la tête d'entrée (11) de gaz dans la position de soudage, **en ce que** l'on presse la tête d'entrée (11) de gaz avec la couche isolante (15) en surplomb et la bague de sécurisation (16) au soudage en surplomb, sans fente d'air résiduelle sur le compartiment à eau (6) et on la pointe sur trois à quatre points du joint de soudure prévu.

11. Procédé selon la revendication 10, **caractérisé en ce que** l'on amène le raccord tubulaire vers une soudeuse automatique conventionnelle et on le serre sur un mandrin à trois ou quatre mâchoires sur une face intérieure (20) de l'entrée de gaz de la tête d'entrée (11) de gaz et **en ce que** l'on guide une première torche de soudage de la soudeuse automatique dans la rainure de soudage du joint de soudure.

12. Procédé selon la revendication 11, **caractérisé en ce que** l'on réalise la première couche de soudure à l'aide d'un procédé de soudage de métaux avec des gaz actifs et une matière d'apport à forte formation de scories, les scories de soudage qui se forment se créant entre le bain de soudage qui se forme et la bague de sécurisation (16) au soudage et la matière en fusion qui se forme étant protégée de l'oxygène par les scories de soudage qui se forment.

13. Procédé selon la revendication 12, **caractérisé en ce qu'**après le soudage de la première couche de soudure, l'on élimine totalement par voie mécanique les scories de soudage qui se sont déposées sur la face supérieure de la couche de soudure, **en ce que** l'on soude et l'on remplit le joint de soudure restant avec une deuxième torche de soudage de la soudeuse automatique et une matière d'apport conventionnelle dans un passage avec 2n couches de soudure ou cordons de soudure.

14. Procédé selon la revendication 13, **caractérisé en ce que** l'on ferme et l'on remplit le joint de soudure restant avec une âme massive, en un passage avec 2n couches de soudure ou cordons de soudure, sachant que n = de 1 à 12.

15. Procédé selon la revendication 14, **caractérisé en ce que** l'on ferme et l'on remplit le joint de soudure restant avec une âme massive, en un passage avec 2n couches de soudure ou cordons de soudure, sachant que n = de 3 à 8.
